# EUROPÄISCHE PATENTANMELDUNG

(11) **EP 0 773 083 A2**
(43) Veröffentlichungstag der Anmeldung: **14.05.1997**
(21) Anmeldenummer: 96117414.1
(22) Anmeldetag: 30.10.1996
(51) Int. Cl.: B23D 61/02

(54) **Kreissägeblatt mit Transportzähnen**

(30) Priorität: 02.11.1995 DE 19540643
(71) Anmelder: Röttger Jansen-Herfeld, 42824 Remscheid (DE)
(72) Erfinder: Jansen-Herfeld, Röttger, Dipl.-Ing., 42853 Remscheid (DE)

(57) **Zusammenfassung**

Kreissägeblatt mit zwischen den Schneidzähnen angeordneten Transportzähnen, deren Überstand über die Sägeblattebene geringer ist als der der Schneidzähne und deren radiale Erstreckung vom Zahngrund der Schneidzähne bis in die Nähe des Flugkreises der Schneidzahnspitzen reicht zur Verbesserung des Transportes des Zerspanungsvolumens.

## Beschreibung

Die bekannten Kreissägeblätter weisen den Nachteil auf, daß die Schneidzähne nicht das gesamte anfallende Zerspanungsvolumen aus der Schnittfuge transportieren.
Es sind Kreissägeblätter bekannt, die zusätzliche Transportleisten vom Zahngrund radial nach innen gehend aufweisen, um diesen Effekt zu mindern.
Diese Fugenräumer sind jedoch aufgrund ihrer Form und Anzahl nicht in der Lage das gesamte, von den Schneidzähnen nicht transportierte Zerspanungsvolumen aus der Schnittfuge zu räumen. Außerdem wirken diese außerhalb der Verzahnung und führen somit zu Erhitzungen des Sägeblattes.

Der Erfindung liegt die Aufgabe zugrunde, ein Sägeblatt zu schaffen, bei dem das Sägemehl innerhalb des Verzahnungsbereiches bleibt und nicht weiter radial zur Drehachse transportiert wird.
Das erfindungsgemäße Sägeblatt weist zusätzliche Transportzähne auf, deren äußerste Zahnspitzen auf einem kleineren Durchmesser als dem äußersten Durchmesser der Schneidzähne liegen. Außerdem weisen diese Transportzähne mindestens auf einer Seite eine Kante auf, die parallel zur Sägeblattebene liegt und axial über diese Ebene hinausragt, wobei dieser Überstand kleiner ist als der seitliche Überstand der Schneidzähne.

In einer Sonderausführung kann die Zahntiefe dieser Transportzähne vor deren Zahnbrust größer sein als auf deren Rückseite.
Eine weitere Ausführungsform dieser Transportzähne weist an seiner Brust eine Transportzahnverzahnung auf, die das Schnittgut in seiner radialen Bewegungsmöglichkeit behindert und somit den Transport in Umfangsrichtung verbessert.
Vorzugsweise erstrecken sich die Transportzähne in der Länge ihrer Transportkante vom Zahngrunddurchmesser der Schneidzähne bis auf einen geringfügigen Abstand zum Flugkreis der Schneidzahnspitzen.

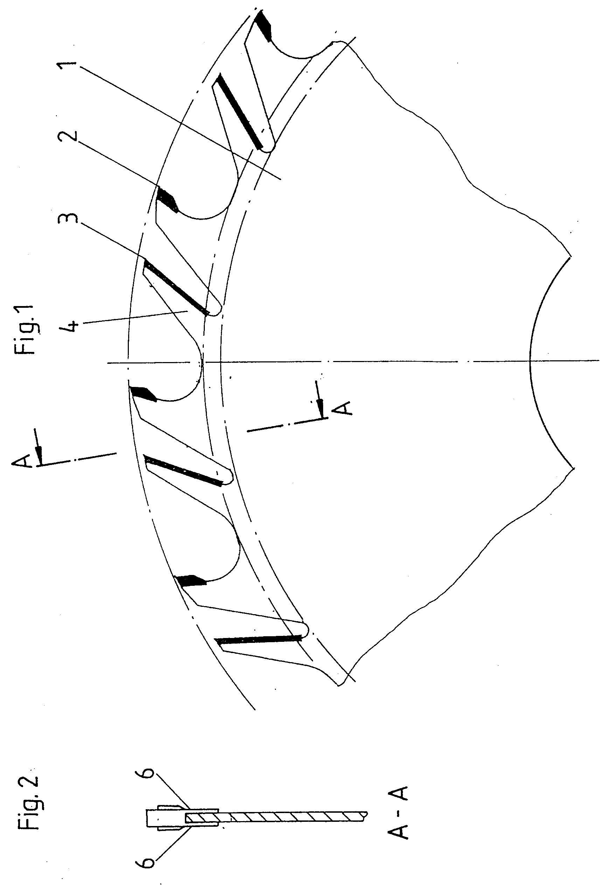

Figur 1 zeigt die erfindungsgemäße Verzahnung mit dem Sägeblatt (1), den Schneidzähnen (2), der Transportzahnleiste (3) und den Transportzähnen (4).

Figur 2 zeigt Figur 1 im Schnitt A-A mit den Transportkanten (6) der Transportzahnleisten (3).

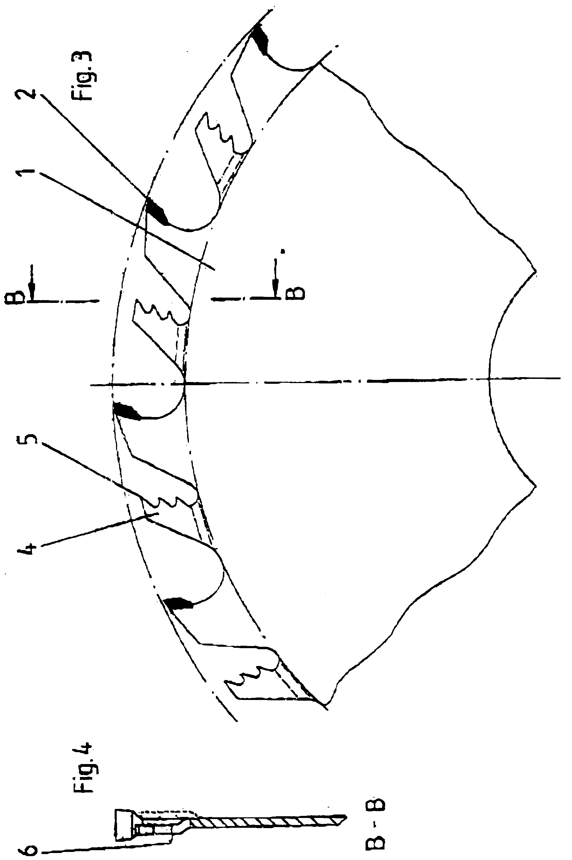

Figur 3 zeigt eine weitere Ausführungsform des Sägeblattes (1) mit Transportzähnen (4) und einer Transportzahnverzahnung (5), deren Spanwinkel wesentlich größer ist als der Spanwinkel der Schneidzähne (2).

### Bezugszeichenliste

- 1: Kreissägeblatt
- 2: Schneidzahn
- 3: Transportzahnleiste
- 4: Transportzahn
- 5: Transportzahnverzahnung
- 6: Transportkante

## Patentansprüche

1. Kreissägeblatt dadurch gekennzeichnet, daß zwischen den Schneidzähnen (2) Transportzähne (4) angeordnet sind, deren äußerste Zahnspitzen auf einem kleineren Durchmesser als dem äußersten Durchmesser der Schneidzähne (2) liegen und daß die Zahntiefe vor den Transportzähnen (4) größer ist als auf deren Rückseite.

2. Kreissägeblatt nach Anspruch 1 dadurch gekennzeichnet, daß die Transportzähne (4) mindestens auf einer Seite eine Transportkante (6) aufweisen, die parallel zur Sägeblattebene liegt und axial über diese Ebene hinausragt oder daß diese Zähne geschränkt sind, wobei der Überstand kleiner ist als der seitliche Überstand der Schneidzähne (2).

3. Kreissägeblatt nach einem oder mehreren der Ansprüche 1 bis 2 dadurch gekennzeichnet, daß die Transportzähne (4) eine Transportzahnverzahnung (5) dergestalt aufweisen, daß diese mehrere kleine Zähne aufweist, deren Spanwinkel erheblich größer ist als der Spanwinkel der Schneidzähne (2).

4. Kreissägeblatt nach einem oder mehreren der Ansprüche 1 bis 3 dadurch gekennzeichnet, daß sich die Transportkanten (6) der Transportzähne (4) in ihrer Länge vom Zahngrunddurchmesser der Schneidzähne (2) bis auf einen geringfügigen Abstand zum Flugkreis der Schneidzahnspitzen erstrecken.
